# FASCICULE DE BREVET EUROPEEN

(11) **EP 0 726 481 B1**
(45) Date de publication et mention de la délivrance du brevet: **28.11.2001**
(21) Numéro de dépôt: 96400231.5
(22) Date de dépôt: 02.02.1996
(51) Int. Cl.: G02B 27/00, G02B 27/01

(54) **Dispositif de pliage des voies optiques de deux projecteurs d'images droite et gauche d'un viseur de casque binoculaire à projection sur visière**
Vorrichtung zum Abknicken des optischen Weges zweier Projektoren für das auf den Schirm eines binokularen Visorhelmes projizierte rechte und linke Bild
Device for folding the optical way in two projectors for projecting the right and left image onto the screen of a binocular helmet visor

(30) Priorité: 07.02.1995 FR 9501386
(43) Date de publication de la demande: 14.08.1996
(73) Titulaire: THALES AVIONICS S.A., 78141 Vélizy Villacoublay Cédex (FR)
(72) Inventeur: Monnier, Laurent, Thomson CSF, SCPI, F-92402 Courbevoie Cedex (FR)
(74) Mandataire: Beylot, Jacques

(56) Documents cités:
- EP-A- 0 252 200
- EP-A- 0 288 365

## Description

La présente invention concerne les viseurs de casque binoculaires à projection sur visière. Ceux-ci comportent deux projecteurs d'image projetant chacun une image sur la paroi intérieure semi-réfléchissante de la visière d'un casque, l'un en face de l'oeil droit et l'autre en face de l'oeil gauche du porteur du casque. Ces deux projecteurs d'image acheminent des images en face des yeux du porteur du casque depuis des sources d'image qui sont soit des objectifs pourvus de dispositifs intensificateurs de lumière, soit des générateurs de symboles, soit l'un et l'autre, placés sur le côté du casque pour ne pas empiéter sur le champ visuel du porteur du casque. Pour ce faire ils comportent des chemins ou voies optiques en lignes brisées qui contournent la tempe et le front du porteur du casque et qu'il importe de raccourcir le plus possible afin de diminuer le poids et le balourd du casque équipé du viseur binoculaire.

La forme concave de la paroi intérieure de la visière tournée vers le centre du casque fait que les plans de symétrie des optiques de projection, définis par l'axe de visée, passant par chaque oeil de l'observateur, et comprenant le centre de courbure de la visière intérieure, ne sont pas verticaux mais inclinés, et se croisent dans le plan sagittal au niveau du front du porteur du casque. Pour limiter la longueur des voies optiques des deux projecteurs, on pourrait songer à ne pas corriger ce croisement de sorte que le projecteur projetant une image à destination de l'oeil droit aurait une source d'image placée à gauche de la tête du porteur du casque et le projecteur projetant une image à destination de l'oeil gauche aurait une source d'image placée à droite de la tête du porteur du casque. Mais cette disposition n'est pas acceptable pour réaliser une prise d'image intensifiée binoculaire car chaque oeil doit recevoir une image intensifiée provenant d'une prise de vue effectuée de son côté pour conserver un effet stéréoscopique de même sens et éviter des troubles dans la perception des reliefs et des distances. Il est donc nécessaire de décroiser les voies optiques des deux projecteurs d'image grâce à des pliages. Ces pliages se font, de manière habituelle, à l'aide d'un couple de miroirs ordinaires, inclinés, disposés en vis-à-vis, symétriquement par rapport au plan sagittal, à la hauteur du front du porteur du casque. On se heurte alors, pour le positionnement des miroirs, à la nécessité de faire en sorte que le miroir assurant le pliage d'une voie optique n'intercepte pas l'autre voie optique et réciproquement, ce qui implique des dégagements entre les miroirs qui augmentent les longueurs des trajets optiques et la hauteur du dispositif, et ont une influence défavorable sur le poids du dispositif et le balourd du casque.

La présente invention a pour but de lutter contre cet inconvénient.

Elle a également pour but de donner aux trajets optiques des projecteurs d'image du viseur un minimum de longueur et d'encombrement.

Elle a pour objet un casque binoculaire comprennant un viseur, une visière et un dispositif de pliage des voies optiques des projecteurs d'images droite et gauche du viseur de casque binoculaire à projection sur visière, selon la revendication 1.

Selon une autre caractéristique de l'invention, les miroirs holographiques sont disposés en vis-à-vis, symétriquement par rapport au plan sagittal, à hauteur du front du porteur du casque, avec une inclinaison de la normale vers le bas en direction du plan sagittal.

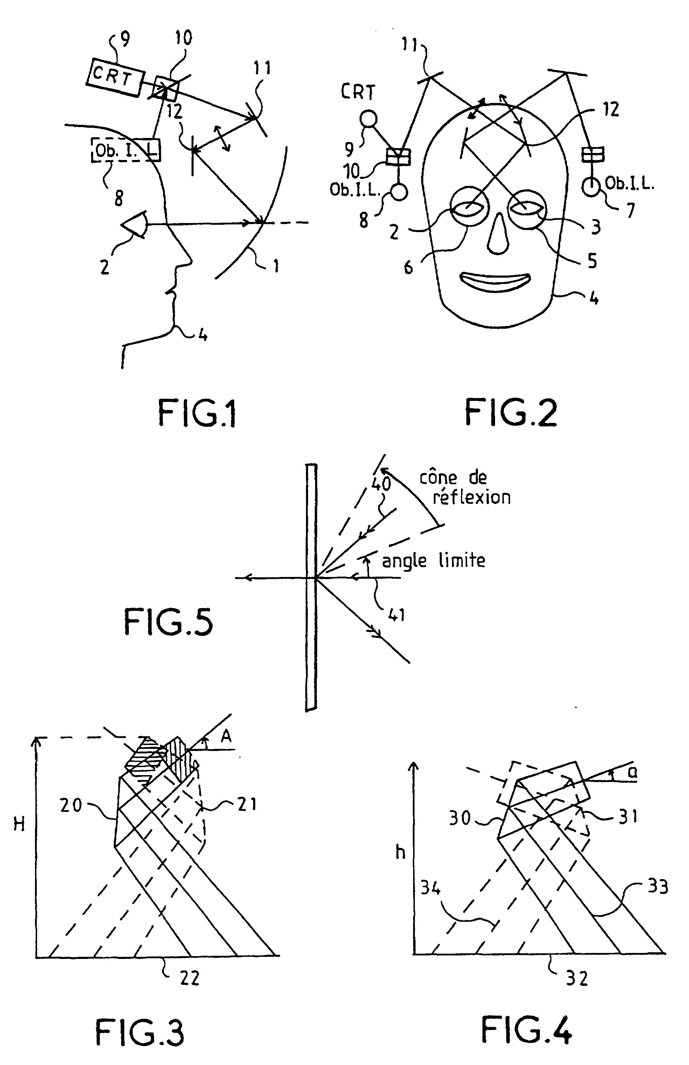

D'autres caractéristiques et avantages de l'invention ressortiront de la description d'un mode de réalisation donné à titre d'exemple. Cette description sera faite ci-après en regard du dessin dans lequel :
- des figures 1 et 2 représentent schématiquement, de profil et de face, les voies optiques de deux projecteurs d'images droite et gauche d'un viseur de casque binoculaire à projection sur visière ;
- une figure 3 est un schéma illustrant la façon usuelle de réaliser les pliages des voies optiques nécessités par leur croisement avant leur arrivée sur la visière ;
- une figure 4 est un schéma illustrant la nouvelle manière selon l'invention de réaliser les pliages des voies optiques nécessités par leur croisement avant leur arrivée sur la visière ; et
- une figure 5 est un schéma illustrant les propriétés de réflexion et de transmission d'un miroir holographique.

Les figures 1 et 2 illustrent les configurations des chemins ou voies optiques des deux projecteurs d'images droite et gauche utilisés dans un viseur de casque binoculaire à projection sur visière. Les deux projecteurs d'images servent à projeter une image sur la paroi intérieure de la visière 1, l'un en face de l'oeil droit 2, l'autre en face de l'oeil gauche 3 du porteur 4 du casque. Les images se forment dans des zones semi-transparentes de la visière 1 qui font face aux yeux du porteur du casque et dont les contours 5 et 6 apparaissent sur la figure 2. Elles proviennent de tubes intensificateurs de lumière l.L. placés derrière des objectifs Ob. 7 et 8 disposés latéralement en dehors du champ de vision du porteur du casque et éventuellement d'un générateur de symboles 9 à tube cathodique CRT. Elles suivent des chemins ou voies optiques en lignes brisées qui sont illustrées par des traits et contournent les tempes et le front du porteur du casque tout en restant aussi près que possible de la tête du porteur du casque pour réduire le balourd au minimum et en étant les plus courts possibles pour réduire le poids du viseur.

Comme on peut le voir sur la figure 1, le trajet optique suivi par l'image du projecteur affecté à l'oeil droit 2 part d'un objectif équipant un tube intensificateur de lumière Ob.I.L. 8 et d'un générateur de symboles CRT 9 dont les images sont superposées dans un combineur 10 placé au voisinage de la tempe droite du porteur du casque. Il remonte ensuite le long de la tempe droite du porteur du casque jusqu'à un miroir de renvoi 11 qui le réoriente en descente, en direction de l'espace situé sous la visière en avant de la partie gauche du front du porteur du casque. Là il rencontre un deuxième miroir de renvoi 12 qui le dirige enfin sur la paroi interne de la visière dans la zone semi-transparente 6 faisant face à l'oeil droit 2 du porteur du casque. Différentes optiques sont réparties le long de ce trajet pour conserver au faisceau une section minimale et pour faire en sorte qu'une image collimatée apparaisse sur la visière. Le trajet optique suivi par l'image du projecteur affecté à l'oeil gauche 3 est symétrique, par rapport au plan sagittal, du trajet suivi par l'image du projecteur affecté à l'oeil droit 2.

Les zones 5 et 6 de la paroi intérieure de la visière où sont projetées les images ne sont pas planes mais concaves, tournées vers le centre du casque, ce qui entraîne des déformations des images que l'on doit compenser par ailleurs. Pour limiter ces déformations au minimum, on a intérêt à aborder ces zones selon des directions aussi proches que possible de leurs centres de courbure ce qui implique d'éclairer la zone 5 face à l'oeil gauche du porteur du casque par la droite et la zone 6 face à l'oeil droit du porteur du casque par la gauche et par conséquent de croiser les voies optiques des deux projecteurs au niveau du front du porteur du casque. Cela se fait, de manière habituelle, comme représenté à la figure 3, au moyen de deux simples miroirs 20, 21 placés en vis-à-vis, symétriquement par rapport au plan sagittal, au niveau du front du porteur du casque, et légèrement inclinés vers le bas par rapport à la verticale. Comme on peut le voir sur la figure 3, l'inconvénient de ces miroirs 20 et 21 réside dans une augmentation d'encombrement des systèmes optiques entraînée par l'augmentation de tirage due aux déviations angulaires nécessaires pour avoir un dégagement entre les miroirs suffisant pour que le miroir assurant le pliage d'une voie optique partant de la paroi intérieure 22 de la visière n'intercepte pas l'autre voie optique et réciproquement.

Pour minimiser l'augmentation du trajet optique entraînée par le décroisement des voies optiques des deux projecteurs d'image, on propose, conformément à la figure 4, d'utiliser des miroirs holographiques 30, 31. Ces miroirs holographiques ont la particularité, comme représenté à la figure 5, d'avoir un cône de réflexion admettant un angle limite minimum en deçà duquel ils se laissent traverser avec un minimum de perte. Ainsi, ils réfléchissent les rayons lumineux leur parvenant avec un angle d'incidence moyenne de l'ordre de 45 degrés tel que le rayon lumineux 40 tout en se laissant traverser par les rayons lumineux leur parvenant sous un angle d'incidence proche de la normale tel que le rayon lumineux 41. Grâce à cette propriété, on peut envisager de placer le miroir holographique assurant le pliage d'une voie optique sur le trajet de l'autre voie optique à la condition que l'autre voie optique arrive sous un angle d'incidence suffisamment faible par rapport à la normale pour ne pas être dans son cône de réflexion. C'est ce qui est représenté à la figure 4 où l'on voit que chaque voie optique 33 respectivement 34 partant de la paroi intérieure 32 de la visière arrive d'abord, sur un premier miroir holographique 30 respectivement 31 sous un angle d'incidence moyenne inclus dans le cône de réflexion de ce premier miroir, est réfléchi puis tombe sur le deuxième miroir holographique 31 respectivement 30 sous un angle d'incidence proche de la normale, inférieur à l'angle limite de sorte qu'il le traverse.

De la comparaison des deux figures 3 et 4, II ressort que l'utilisation de miroirs holographiques permet de raccourcir les trajets optiques de la quantité hachurée sur la figure 3, de diminuer la hauteur du dispositif et d'augmenter l'inclinaison des voies optiques après leur décroisement ce qui permet de réduire l'encombrement en hauteur du viseur de casque binoculaire.

La solution à miroirs holographiques par rapport à une solution à miroirs semi-transparents, apporte un gain important de rendement photométrique puisqu'elle permet d'espérer un minimum de 80% de rendement photométrique au lieu de 25 %.

## Revendications

1. Casque binoculaire comprennant un viseur, une visière et un dispositif de pliage, dans le viseur de casque binoculaire à projection sur visière, d'une première voie optique (34) menant d'un projecteur d'image droite à une première zone semi-réfléchissante de la paroi intérieure de la visière (1) du casque placée en face de l'oeil droit du porteur du casque, et d'une deuxième voie optique (33) menant d'un projecteur d'image gauche à une deuxième zone semi-réfléchissante de la paroi intérieure de la visière (1) du casque placée en face de l'oeil gauche du porteur de casque, les deux voies optiques (34, 33) se croisant avant d'arriver sur les zones semi-réfléchissantes de la paroi intérieure de la visière (1) du casque faisant face aux yeux du porteur du casque, **caractérisé en ce qu'**il comporte un couple de miroirs holographiques (30, 31), l'un (30) recevant la première voie optique (34) sous une incidence voisine de la normale, inférieure à son angle limite de réflexion de sorte qu'il se laisse traverser par elle et la deuxième voie optique (33) sous une incidence moyenne comprise dans son cône de réflexion de sorte qu'il la réfléchit et assure son pliage avant qu'elle ne parvienne sur la paroi intérieure de la visière (1), et l'autre (31) recevant la deuxième voie optique (33) sous une incidence voisine de la normale, inférieure à son angle limite de réflexion de sorte qu'il se laisse traverser par elle et la première voie optique (34) sous une incidence moyenne comprise dans son cône de réflexion de sorte qu'il la réfléchit et assure son pliage avant qu'elle ne parvienne sur la paroi intérieure de la visière (1).

2. Casque binoculaire selon la revendication 1, **caractérisé en ce que** les miroirs holographiques (30, 31) sont disposés en regard, symétriquement par rapport au plan sagittal, à hauteur du front du porteur du casque, avec une inclinaison vers le bas en direction du plan sagittal.

## Patentansprüche

1. Binokularhelm, der ein Visier, eine Augenblende und eine Umlenkvorrichtung umfaßt, wobei die Umlenkvorrichtung im Visier des Binokularhelms mit Projektion auf die Augenblende einen ersten optischen Weg (34), der von einem rechten Bildprojektor zu einer gegenüber dem rechten Auge des Helmträgers angeordneten halbreflektierenden ersten Zone der Innenwand der Augenblende (1) des Helms führt, und einen zweiten optischen Weg (33), der von einem linken Bildprojektor zu einer vor dem linken Auge des Helmträgers angeordneten halbreflektierenden zweiten Zone der Innenwand der Augenblende (1) des Helms führt, umlenkt, wobei sich die zwei optischen Wege (34, 33) vor der Ankunft in den gegenüber den Augen des Helmträgers sich befindenden halbreflektierenden Zonen der Innenwand der Augenblende (1) des Helms kreuzen, **dadurch gekennzeichnet, daß** er ein Paar holographischer Spiegel (30, 31) umfaßt, wovon einer (30) den ersten optischen Weg (34) unter einem Einfallswinkel empfängt, der in der Nähe der Normalen liegt und kleiner als sein Reflexionsgrenzwinkel ist, so daß dieser durch ihn hindurchgelassen wird, und den zweiten optischen Weg (33) unter einem mittleren Einfallswinkel empfängt, der in seinem Reflexionskegel enthalten ist, so daß er ihn reflektiert und seine Umlenkung sicherstellt, bevor er die Innenwand der Augenblende (1) erreicht, und der andere (31) den zweiten optischen Weg (33) unter einem Einfallswinkel empfängt, der in der Nähe der Normalen liegt und kleiner als sein Reflexionsgrenzwinkel ist, so daß dieser durch ihn hindurchgelassen wird, und den ersten optischen Weg (34) unter einem mittleren Einfallswinkel empfängt, der in seinem Reflexionskegel enthalten ist, so daß er ihn reflektiert und seine Umlenkung sicherstellt, bevor er die Innenwand der Augenblende (1) erreicht.

2. Binokularhelm nach Anspruch 1, **dadurch gekennzeichnet, daß** die holographischen Spiegel (30, 31) auf Höhe der Vorderseite des Helmträgers mit einer Neigung nach unten in Richtung der Sagittal-Ebene symmetrisch in bezug auf die Sagittal-Ebene einander gegenüber angeordnet sind.

## Claims

1. Binocular helmet comprising a sight, a visor and a device for folding, in the sight of the binocular helmet with visor projection, a first optical path (34) projecting a right image on a first semi-reflecting region of the internal wall of the helmet visor (1) placed opposite the right eye of the helmet wearer, and a second optical path (33) projecting a left image on a second semi-reflecting region of the internal wall of the helmet visor (1) placed opposite the left eye of the helmet wearer, the two optical paths (34, 33) crossing each other before reaching the semi-reflecting regions of the internal wall of the helmet visor (1) facing the eyes of the helmet wearer, **characterized in that** it includes a pair of holographic mirrors (30, 31), one (30) receiving the first optical path (34) at an angle of incidence close to the normal and less than its limit angle of reflection such that the first path passes through the mirror and receiving the second optical path (33) at a mean angle of incidence included in its reflection cone such that the mirror reflects the path and folds it before it reaches the internal wall of the visor (1), and the other (31) receiving the second optical path (33) at an angle of incidence close to normal and less than its limit angle of reflection such that the second path passes through the other mirror and receiving the first optical path (34) at a mean angle of incidence included in its reflection cone such that the other mirror reflects the path and folds it before it reaches the internal wall of the visor (1).

2. Binocular helmet according to Claim 1, **characterized in that** the holographic mirrors (30, 31) face each other symmetrically with respect to the sagittal plane, at the helmet wearer's forehead, with a tilt downwards towards the sagittal plane.
